# EUROPÄISCHE PATENTSCHRIFT

(11) **EP 2 301 743 B1**
(45) Veröffentlichungstag und Bekanntmachung des Hinweises auf die Patenterteilung: **09.10.2013**
(21) Anmeldenummer: 11150236.5
(22) Anmeldetag: 20.08.2008
(51) Int. Cl.: B29C 67/00, B29C 41/12, D01D 5/26, D01F 6/00

(54) **VERFAHREN UND VORRICHTUNG ZUM HERSTELLEN EINES FORMKÖRPERS DURCH SCHICHTWEISEN AUFBAU**
METHOD AND APPARATUS FOR LAYERWISE MANUFACTURING OF AN OBJECT
METHODE ET DISPOSITIF POUR LA FABRICATION PAR COUCHES SUCCESSIVES D'UN OBJET

(30) Priorität: 09.05.2008 DE 102008022946
(43) Veröffentlichungstag der Anmeldung: 30.03.2011
(62) Teilanmeldung aus: 08801638.1
(73) Patentinhaber: FIT Fruth Innovative Technologien GmbH, 92331 Parsberg (DE)
(72) Erfinder: Fruth, Carl Johannes, 92331, Parsberg (DE)
(74) Vertreter: Kramer - Barske - Schmidtchen

(56) Entgegenhaltungen:
- EP-A1- 1 439 050

## Beschreibung

### TECHNISCHES GEBIET

Die Erfindung betrifft ganz allgemein Verfahren zur Herstellung eines aus einzelnen, miteinander verbundenen Schichten bestehenden Formkörpers aus pulverförmigen Beschichtungsmaterial. Außerdem betrifft die Erfindung eine Vorrichtung zum Herstellen eines drei dimensionalen Körpers aus einzelnen verfestigten Schichten.

### HINTERGRUND DER ERFINDUNG

Heutzutage werden unterschiedlichste Fertigungsanlagen zur Herstellung von Erzeugnissen bzw. Bauteilen eingesetzt, die bestimmte definierte Bauräume aufweisen. ln den Bauräumen dieser Fertigungsanlagen können auf Grund der Art der Herstellungsverfahren oftmals ein oder mehrere Bauteile in einem Fertigungsgang erzeugt werden. Derartige Verfahren und Vorrichtungen sind beispielsweise allgemein unter dem Begriff ,,Solid Freeform Fabrication" (SFF-Systeme) bekannt und hierunter sind grundsätzlich z.B. Fertigungsverfahren- und -anlagen zu subsumieren, die dreidimensionale Bauteile direkt aus 3D-CAD-Daten fertigen können. Ferner zählen hierzu auch alle bekannten Rapid Prototyping- und Rapid Manufacturing-Verfahren,

Ein gemeinsames Merkmal aller bekannten SFF-Systeme ist der schichtweise Aufbau eines Werkstücks. In den letzten Jahren finden insbesondere derartige SFF-Systeme eine Anwendung, bei denen die einzelnen Schichten aus einem Pulver oder pulverähnlichen Materialien gefertigt werden. Insbesondere werden metallische Bauteile über die Schmelzphase durch das sogenannte Lasersintem oder Elektronenstrahlschmelzen erzeugt. Auch das sogenannte selektive Lasersintern (SLS-Verfahren) arbeitet nach diesem Prinzip. Beim selektiven Maskensintern (SMS-Verfahren) wird anstelle eines Laserstrahls eine breitflächige Strahlungsquelle wie z.B. ein Array aus Infrarotstrahlern zum Erhärten bzw. Verfestigen definierter Schichtbereiche eingesetzt. Über eine, für jede Schicht neu zu generierende, Maske erfolgt die Festlegung, welche Bereiche einer Schicht zu erhärten bzw. zu verfestigen sind.

Alle diese Verfahren basieren darauf, dass zuerst eine Schicht aus losem, d.h. unverfestigtem Beschichtungsmaterial aufgebracht wird, die eine genau definierte Schichtdicke und Formoberfläche (normalerweise eine plane Oberfläche) hat. Die für die vorliegende Erfindung zum Einsatz kommenden Schichtaufbauverfahren können beispielsweise folgende Verfahren sein: 3DP der Firma Zcorp, Polyjet der Firma Objet, SMS der Firma Sintermask, SLS sowie DMLS der Firmen EOS , SLA sowie IMLS der Firma 3D Systems, Lasercusing der Firma Konzeptlaser, Laserschmelzen der Firma MCP, Electron Beam Melting der Firma Arcam und Electron Beam Sintering sein.

Zur schnellen und kostengünstigen Herstellung von Prototypen oder Kleinserien sind seit längerem die eingangs erwähnten Schichtbausysteme bekannt. Die Hauptanwendung der bisher industriell eingesetzten Rapid Prototyping Systeme liegt in der Herstellung von Bauteilen aus organischen Werkstoffen wie Polymeren und Wachsen. Mehr und mehr finden aber auch Rapid Prototyping Systeme bei der Herstellung von metallischen Bauteilen Verwendung. Insbesondere werden metallische Bauteile über die Schmelzphase durch das sogenannte Lasersintern oder Elektronenstrahlschmelzen erzeugt.

Normalerweise werden bei den genannten Verfahren 3D-CAD-Daten zunächst in eine Vielzahl von einzelnen Schichten bzw. Höhenschnitte zerlegt, um daraus im eigentlichen Herstellungprozess das Werkstück aufzubauen. Es müssen also für alle bekannten Schichtbauverfahren zur Herstellung von dreidimensionalen Körpern für jede Schicht die Körperumrissdaten vorhanden sein. Körperumrissdaten sind hier die Daten, die in der jeweiligen Schicht genau festlegen, welche Bereiche der Schicht je nach Art der eingesetzten Schichtbautechnologie zu schmelzen oder zu sintern sind. Ein solches Verfahren ist beispielsweise in der internationalen Patentanmeldung PCT/EP2004/002965 beschrieben. Dabei wird eine Schicht hergestellt, indem auf eine Unterlage oder eine bereits gefertigte Schicht eine Schicht vorbestimmter Dicke aus einem Pulver aufgebracht wird und dieses Pulver beispielsweise durch Laserbestrahlung gezielt in den Bereichen, die die jeweilige Schicht des Formkörpers bilden, verfestigt wird und sich dabei mit darunter befindlichen verfestigten Bereichen der vorhergehenden Schicht verbindet. Nach Fertigstellung der obersten Schicht wird das nicht verfestigte Pulver entfernt, so dass der aus dem verfestigten Pulver bestehende Formkörper übrig bleibt. Voraussetzung für diese Verfahren ist als Ausgangsmaterial ein Pulver, das einerseits in Schichten definierter Dicke auf eine Unterlage aufbringbar ist und das andererseits durch gezieltes Aufschmelzen oder Sintern oder in Berührung bringen mit einer des Pulver vernetzenden Flüssigkeit in wohldefinierter Weise gezielt verfestigbar ist, und dabei mit bereits verfestigten Bereichen einer vorhergehenden Schicht eine mechanische Verbindung eingeht.

Solche Pulver, die beispielsweise aus Metallen, Metalllegierungen oder Thermoplasten, insbesondere jene Polyamide mit einer langen Kohlenwasserstoffkette zwischen den Amidgruppen, wie PA 11 oder PA 12 bestehen, sind in ihrer Herstellung verhältnismäßig aufwendig, da die Pulverteilchen innerhalb enger Grenzen festgelegte Abmessungen (Durchmesser, größter Durchmesser zu kleinster Durchmesser bei elliptischen Teilchen, Oberflächenrauhigkeit usw.) haben müssen.

Aus der genannten Druckschrift PCT/EP2004/002965 ist es bekannt, dem thermoplastischen Pulver zur Verbesserung der mechanischen Eigenschaften Zusatzstoffe, wie Glaskügelchen, Aluminiumflocken oder auch versteifende- oder verstärkende Fasern, beispielweise Carbon-, Glas-, Keramik- oder Borfasern zuzusetzen, deren Volumenanteil bis zu 30% des Pulvers betragen kann und deren Längenverteilung so gewählt ist, dass ein möglichst geringer Prozentsatz der Fasern aus der Oberfläche der Pulverteilchen, in die die Fasern bei der Herstellung des Pulvers eingelagert werden, herausragen. Dadurch ist gewährleistet, dass die Vernetzung der Pulverteilchen bzw. die Verfestigung des Pulvers bei der Laserbestrahlung nicht beeinträchtigt wird.

In den Druckschriften EP 1 058 675 B1 und US 4,938,816 sind Verfahren zum Lasersintern offenbart, bei dem ein Keramik- oder andere Pulver zum Einsatz kommen. Aus der DE 195 14 740 C1 ist eine Vorrichtung zum Lasersintem, insbesondere von Metallpulver bekannt. In der DE 10 2004 008 168 A1 ist eine Vorrichtung und ein Verfahren zum Auftragen von Fluiden gezeigt. Schließlich ist aus der bekannt, beim Lasersintern das Pulver beim oder vor dem Verfestigen mit dem Lasermittel eine Schicht zu verdichten, um eine hohe Volumendichte zu erhalten.

In der EP 1 058 675 B1 ist offenbart, beim Lasersintern von Keramikpulver eine aufgetragene Pulverschicht mittels einer Walze zu verdichten. Dadurch soll die Zeit verringert werden, die beim Sintern in der festen Phase des Keramikpulvers erforderlich ist. Alternativ werden auch Beschichtungseinrichtungen mit Klingen, Rakeln oder Abstreifer eingesetzt, wie sie beispielsweise in der DE 10 2005 024 790 A oder DE 195 15 165 A1 gezeigt sind.

Auch die DE 10 2006 023 484 A1 zeigt eine Beschichtungseinrichtung mit Klinge, die eine in Beschichtungsrichtung ansteigende Auftragsfläche aufweist. Die Auftragsfläche an der einem Träger zugewandten Unterseite der Klinge ist unter einem Winkel von größer als 0,2° und kleiner als etwa 5° in Bewegungsrichtung des Beschichters ansteigend ausgebildet. Damit soll die sogenannte Auffrischrate verringert werden und zudem sollen mit diesem Verfahren die Kosten pro Bauteil reduziert werden.

Aus der DE 195 14 740 C1 ist eine Vorrichtung zum Lasersintem, insbesondere von Metallpulver bekannt, bei der das Pulver mittels einer Beschichterklinge aufgetragen wird. Die Klinge hat eine abgeschrägte Flanke an der Beschichtungskante, deren Winkel zwischen 30° und 90° liegt. An der gegenüberliegenden Glättkante ist ebenfalls eine abgeschrägte Fläche vorgesehen, die einen Winkel zwischen 1° und 60° aufweist. Die Glättkante soll eine bereits verfestigte Schicht glätten.

Die DE 44 14 775 A1 zeigt eine Vorrichtung und ein Verfahren zum Herstellen eines dreidimensionalen Objekts mit einem sogenannten Abstreifer, dessen Unterkante sich im Wesentlichen in Höhe einer Überlaufkante quer über einen Behälter erstreckt.

In der EP 0 738 584 A1 ist ein Beschichter offenbart, der sich im Wesentlichen quer über einen offenen Bereich eines Behälters erstreckt. In einer Ausführungsform des Beschichters ist eine erste Seitenfläche und eine parallel dazu verlaufende zweite Seitenfläche vorhanden, welche sich im Wesentlichen senkrecht zur Oberseite eines Trägers erstreckt. Eine Grundfläche verläuft parallel zu der Oberseite des Trägers und liegt in einer Arbeitsebene. Die erste Seitenfläche und die Grundfläche definieren zwischen sich einen ersten Randabschnitt, welcher durch eine schräg zu diesen Flächen verlaufende ebene Fläche gebildet ist. Diese ebene Fläche schließt mit der Ebene, in der die Grundfläche liegt, einen Winkel von vorzugsweise etwa 60° ein. Die zweite Seitenfläche und die Grundfläche definieren zwischen sich einen zweiten Randabschnitt, der der durch eine ebene Fläche gebildet wird, welche mit der Ebene, in der die Grundfläche liegt, einen Winkel von vorzugsweise 30° einschließt. Hier wird ebenfalls eine Glättkante mit einer zweiten Phase gebildet.

In der DE 10 2004 008 168 A1 ist eine Vorrichtung und ein Verfahren zum Auftragen von Fluiden gezeigt. Hier wird das Fluid auf den zu beschichtenden Bereich aufgetragen und danach wird ein Nivellierelement über dem aufgetragenen Fluid verfahren. Dabei wird das Fluid aus einem mit einer Öffnung versehenen Dosiersystem zugeführt. Zumindest beim Auftragen des Fluids führt dieses Schwingungen aus.

In der WO 2006/033621 A1 ist ein Verfahren zum Herstellen eines kontinuierlichen Produkts aus Holzmehl offenbart. Hier wird eine Schicht aus Holzmehl auf einen Untergrund aufgebracht, ein Bindemittel wird auf die Holzmehlschicht aufgebracht, worauf eine zusätzliche Schicht aus Holzmehl auf die vorangegangene Holzmehlschicht aufgebracht wird. Das Aufbringen von Holzmehl Bindemittel wird abwechselnd in gewünschter Anzahl wiederholt, wobei das Holzmehl der entsprechenden Schichten mit den benachbarten Schichten verbunden wird und einen natürlichen Körper mit dem Bindemittel bildet.

In der DE 44 00 523 A1 ist ein Verfahren und eine Vorrichtung zum Herstellen eines dreidimensionalen Objekts gezeigt. Hier wird beim schichtweisen Aufbringen das Material mittels eines vibrierenden Abstreifelements abgezogen bzw. einen zum Aufbringen des Materials verwendeten verschiebbaren Behälter an seiner Unterseite mit derartigen Abstreifelementen versehen.

Aus der EP 1 270 185 A1 ist ein System und ein Verfahren für die Herstellung von frei von Körpern aus Feststoffen bekannt.

Die DE 101 17 875 C1 zeigt ein Verfahren und eine Vorrichtung zum Auftragen von Fluiden, sowie eine Verwendung einer solchen Vorrichtung.

Aus der WO 2008/028443 A2 ist eine Beschichtereinrichtung für eine Bohrvorrichtung zur Erstellung von Formteilen aus pulverartigem Baumaterial unter Einbringung von Strahlungsenergie bekannt.

In der US 4,938,816 ist beschrieben, beim Lasersintern das Pulver beim oder vor dem Verfestigen mit dem Lasermittel eine Schicht zu verdichten, um eine hohe Volumendichte zu erhalten.

Schließlich zeigt die WO2008/02844 A2 eine Beschichtereinrichtung, die ein Siebelement als Boden eines Vorratsbehälters aufweist. Durch das Sieben von Beschichtungsmaterial soll eine Abkehr von bisherigen, die zu beschichtende Oberfläche berührenden Beschichtungseinrichtungen erfolgen. Insbesondere ist der Beschichter derart ausgebildet, dass die Beschichterelemente mit einem Abstand über der zu beschichteten Oberfläche angeordnet sind oder über dieser verfahren werden und das Beschichtermaterial punktuell, d.h. gezielt oder flächig über die gesamte zu beschichtende Oberfläche von oben auf diese Oberfläche herabrieselt und eine gleichmäßige Schicht bildet, die u.U. noch durch ein Ausgleichselement geringfügig ausgeglichen werden kann. Eine verschieb- oder verschwenkbar angeordnete Abdeckeinrichtung ist an der Unterseite des Beschichtersiebes angeordnet. Diese Abdeckeinrichtung soll den Beschichtersieb derart abdecken, dass ein gewollter Durchtrittsbereich verbleibt, durch welchen Baumaterial auf eine Baufläche oder einen sonstigen ausgewählten Bereich des entstehenden Formteils abgesetzt werden kann. Diese bekannte Abdeckeinrichtung hat keine Funktion im Hinblick auf die Festlegung der Schichtdicke von Beschichtungsmaterial. Die Schichtdicke wird einzig und allein durch die Dauer des Herabrieselns von Beschichtungsmaterial auf die beabstandete untere Fläche festgelegt.

Die bekannten Einrichtungen und Verfahren haben jedoch möglicherweise den Nachteil, dass während eines Beschichtungsvorgangs hohe Kräfte, insbesondere Seitenkräfte in darunterliegende Schichten eingeleitet werden und sie deshalb unter Umständen entweder nur in einem sehr engen Prozessfenster funktionieren oder eine geringe Fehlertoleranz aufweisen. Ferner ist es auch möglich, dass derartige Verfahren besonders hohe Anforderungen an die zu verwendenden Werkstoffe stellen, da die eingebrachten Kräfte abhängig von der Fließfähigkeit der Pulver bzw. der Viskosität der Pasten sind. Insbesondere sogenannte spratzige Pulver können deshalb problematisch mit bestehenden Einrichtungen und Verfahren zu verarbeiten sein oder erreichen bei der Beschichtung keine ausreichende Schüttdichte, um bei der Verarbeitung eine ausreichende Dichte zu erlagen. Dies trifft im besonderen auch auf faserige Beschichtungswerkstoffe zu. Oftmals werden deshalb runde Pulver verwendet, die häufig mit Fließverbesserern wie zum Beispiel Ruß oder SiO₂ gemischt werden, um diese Pulver für die üblichen Beschichtungseinrichtungen verarbeitbar zu machen. Die bekannten Beschichtungsverfahren und Einrichtungen verursachen möglicherweise Schwierigkeiten, wenn die zu beschichtende Fläche unterschiedliche Zustände aufweist, beispielsweise wenn unausgehärtetes Material und ausgehärtetes Material oder loses Pulver und aufgeschmolzenes Pulver vorhanden ist. Ebenso ist anzumerken, dass bei den bestehenden Systemen durch die Beschichtungsvorgänge erhebliche Störungen im Thermohaushalt der bereits aufgetragene Schichten auftritt. Es ist auch möglich, dass diese bekannten Verfahren und Einrichtungen nachteilig sind, wenn sie während des Aushärtens, Abbindens oder Schmelzens von zumindest Teilbereichen eine Oberfläche ausbildet, die von der ursprünglichen Oberfläche in Richtung der nächsten Schicht ausgelenkt ist. So ist es möglich, dass Pickel, Beulen oder Tröpfchen oder sonstige Arten von Reliefstrukturen durch eine vorangegangene Aushärtung vorhanden sind und damit eine Kollision oder zumindest eine Störung für die nächste Beschichtung auftreten kann.

Ein der Erfindung zugrundeliegendes technisches Problem besteht darin, eine Vorrichtung und Verfahrensweise zum Herstellen eines dreidimensionalen Körpers aus einzelnen verfestigten Schichten bereitzustellen, bei denen eines oder mehrere der oben genannten Probleme weniger stark auftritt oder möglicherweise sogar beseitigt ist.

### DARSTELLUNG DER ERFINDUNG

Das der Erfindung zugrundeliegende technische Problem wird durch ein Verfahren zum Herstellen eines dreidimensionalen Körpers aus einzelnen, verfestigten Schichten, die aus einem pulverförmigen Beschichtungsmaterial erzeugt werden, das nachfolgende Verfahrensschritte aufweist, gelöst. So wird ein zu verfestigendes Beschichtungsmaterial in einer ersten Schichtdicke auf einer Unterlage oder einer bereits verfestigten Schicht des herzustellenden Körpers durch Herausziehen eines verschiebbar gelagerten Bodenelementes eines Vorratsbehälters mit darin befindlichem Beschichtungsmaterial aufgebracht. Es erfolgt ein Trennen desjenigen Teils des aufgebrachten, noch nicht verfestigten Beschichtungsmaterials, der sich oberhalb einer zweiten Schichtdicke, die geringer ist als die erste Schichtdicke, befindet, von dem unterhalb der zweiten Schichtdicke befindlichen Beschichtungsmaterial, durch Einschieben des Bodenelementes in das Beschichtungsmaterial, sodass eine neue Schicht aus unverfestigtem Beschichtungsmaterial verbleibt, die die zweite Schichtdicke hat. Außerdem erfolgt ein Verfestigen des verbleibenden Beschichtungsmaterials der neuen Schicht an vorbestimmten Stellen zur Erzeugung einer gewünschten Schichtkontur des dreidimensionalen Körpers.

Eine erfindungsgemäße Vorrichtung zum Herstellen eines dreidimensionalen Körpers aus einzelnen verfestigten Schichten aus einem pulverfömigen Beschichtungsmaterial umfasst einen Vorratsbehälters für Beschichtungsmaterial mit verschiebbar in das Beschichtungsmaterial einschiebbar gelagertem Bodenelement. Dabei ist durch Herausziehen des Bodenelementes das Beschichtungsmaterial in einer ersten Schichtdicke auf einer Unterlage oder einer bereits verfestigten Schicht des herzustellenden Körpers aufbringbar. Durch Einschieben des Bodenelementes in das Beschichtungsmaterial ist derjenige Teil des aufgebrachten, noch nicht verfestigten Beschichtungsmaterials, der sich oberhalb der zweiten Schichtdicke, die geringer ist als die erste Schichtdicke, derart von dem unterhalb der zweiten Schichtdicke befindlichen Beschichtungsmaterials trennbar, dass eine definierte Schicht aus unverfestigtem Beschichtungsmaterial verbleibt, die die definierte zweite Schichtdicke hat. Eine Verfestigungseinrichtung ist dazu ausgebildet, das verbleibende Beschichtungsmaterial an vorbestimmten Stellen zur Erzeugung einer gewünschten Schichtkontur des dreidimensionalen Körpers zu verfestigen.

Eine beispielhafte Ausführungsform von Pulver umfasst Fasern die im Gegensatz zu herkömmlichen, möglichst an eine Kugelform angenäherte Pulverteilchen auf einfache Weise mit genau vorgegebenen Abmessungen hergestellt werden, wodurch die Fasern und das daraus bestehende Pulver kostengünstig ist und gezielte Eigenschaften hat.

Gemäß einer weiteren beispielhaften Ausführungsform von Pulver können die Fasern aus unterschiedlichem Material bestehen und/oder unterschiedliche Abmessungen aufweisen und somit genau auf die jeweiligen Anforderungen abgestimmt werden.

Beispielsweise beträgt der Durchmesser der Fasern zwischen 0,001 und 0,5 mm, vorzugsweise zwischen 0,01 und 0,1 mm. Das Verhältnis von mittlerem Durchmesser zu mittlerer Länge der Fasern liegt bei einer weiteren beispielhaften Ausführungsform der vorliegenden Erfindung vorteilhafterweise zwischen 0,1 und 1000, vorzugsweise zwischen 0,5 und 3. Mit den vorgenannten Dimensionen kann es möglich sein, die Fasern in einer homogenen dünnen Schicht aufzubringen, deren Dicke beispielweise zwischen dem Ein- und Zehnfachen einer Faserabmessung, vorzugsweise des Faserdurchmessers liegt.

Bei einer weiteren beispielhaften Ausführungsform von Pulver sind die Endflächen wenigstens einiger der Faserstücke an ihren Kanten gebrochen bzw. abgeschrägt. Dadurch wird die gegenseitige mechanische Verbindung zwischen den Faserstücken, beispielsweise beim Aufschmelzen oder Sintern, verbessert.

Bei einer weiteren beispielhaften Ausführungsform von Pulver enthalten die Fasern wenigstens eines der folgenden Materialien: Thermoplaste wie Polyamid (PA), Polypropylen (PP), Polylactid (PLA), Polyburylenterephthalat (PBT) oder Polyethylenterephthalat (PET) etc.

Den Fasern können z.B. ein aus Teilchen bestehender Füllstoff zugesetzt sein, wobei die Füllstoffteilchen in der durch die miteinander verbundenen Fasern bestehenden verfestigten Bereichen ohne feste Verbindung mit den Faserstücken eingeschlossen oder selbst miteinander verbunden oder sowohl mit den Faserstücken als auch miteinander verbunden sein können. Der Anteil des Füllstoffes beträgt bevorzugt weniger als 50 Volumenprozente, damit die durch die Fasern gebildete Matrix aufrecht erhalten bleibt. Der Füllstoff kann beispielsweise aus Ruß, Carbon, Glas, Metalloxid oder Keramik bestehen. Je nach bevorzugter Wirkung des Füllstoffes sind die Teilchen des Füllstoffes faserförmig oder spährisch . Die Abmessungen der Füllstoffteilchen betragen vorteilhafterweise zwischen 0,005 und 0,5mm.

Die Fasern können aus einem Material gefertigt sein, das zu länglichen Fasern extrudiert wird und dann zu Faserstücken abgelängt wird. Das Material ist so gewählt, dass es zum Herstellen eines aus einzelnen, miteinander verbundenen Schichten bestehenden Formkörpers gemäß einem Solid Freeform Fabrication-Verfahren geeignet ist.

Der guten Ordnung halber ist anzumerken, dass Fasern Gebilde sind, deren Durchmesser kleiner ist als deren Länge, also ein im Verhältnis zur Länge dünnes und eventuell flexibles Gebilde. Beispielsweise sind Fasern allgemein auch Gebilde, deren geometrische Form sich durch einen extrudierten Querschnitt ergibt. Grundsätzlich kann auch gelten, dass Fasern Gebilde sind, die grundsätzlich zylinderförmig sind. Die Grundform des Zylinders kann aber beliebig sein, nur vorzugsweise ist es ein Kreiszylinder. Auch schiefe Zylinder fallen unter die vorliegende Definition von Fasern

Die mittlere Länge und der mittlere Durchmesser der Fasern werden vorzugsweise durch mikroskopische Untersuchungen sowie optische Partikelmessungen ermittelt. Hierbei wird z.B. die Extrusionsrichtung, also die Zylinderachse als Länge und der Umkreis der Querschnittsfläche, also der Grundfläche eines Zylinders als Durchmesser bezeichnet. Die mittleren Werte können z.B. dadurch errechnet werden, dass die gemessen bzw. ermittelten Werte einer definierten Anzahl von Fasern summiert werden und dieser Summenwert durch die Anzahl von vermessenen Fasern geteilt wird. Die Anzahl der Fasern kann z.B. 10, 100, 1.000, 10.000, oder 100.000 oder mehr betragen. Auch alle möglichen Zwischenwerte sind expressis verbis als offenbart anzusehen. Abschließend ist anzumerken, dass auch bekannte computergestützte quantitative Messungen zur Ermittlung der mittleren Faserlängen und Durchmesser herangezogen werden können, z.B. unter Zuhilfenahme von Computertomographie.

### KURZBESCHREIBUNG DER ZEICHNUNGEN

Im Folgenden sind zur weiteren Erläuterung und zum besseren Verständnis mehrere beispielhafte Ausführungsformen der vorliegenden Erfindung unter Bezugnahme auf die beigefügten Zeichnungen näher beschrieben und erläutert. Es zeigt:
- Fig. 1.: zeigt perspektivische Ansichten von Fasern, wie sie für ein Pulver verwendet werden,
- Fig. 2.: zeigt ein aus unterschiedlichen Faserstücken zusammengesetztes Faserpulver,
- Fig. 3.: zeigt Beispiele für Querschnitt von Fasern,
- Fig. 4.: zeigt ein aus Faserstücken und Füllstoffteilchen zusammengesetztes Faserpulver,
- Fig. 5.: zeigt eine schematische Schnittansicht einer Vorrichtung zur Herstellung eines Formkörpers durch schichtweisen Aufbau,
- Fig. 6.: zeigt einen Ausschnitt eines aus Faserstücken bestehenden Faserpulvers vor Verfestigung, und
- Fig. 7.: zeigt das Faserpulver gemäß Fig. 5 nach Verfestigung.
- Fig. 8: eine Abfolge von Verfahrensschritten gemäß einer ersten beispielhaften Ausführungsform der vorliegenden Erfindung zur Herstellung eines Formkörpers aus mehreren Schichten aus Pulver, insbesondere Fasern,
- Fig. 9: eine Abfolge von mehreren Verfahrensschritten gemäß einer zweiten beispielhaften Ausführungsform eines erfindungsgemäßen Verfahrens zur Herstellung eines Formkörpers aus mehreren Schichten aus Pulver, insbesondere Fasern,
- Fig. 10: eine beispielhafte Ausfühmngsform einer erfindungsgemäßen Vorrichtung mit mehreren Materialauftrags- und Reduziereinrichtungen,
- Fig. 11: eine nicht unter die Ansprüche fallende Ausführungsform einer kombinierten Aufbring- und Reduziereinrichtung,
- Fig. 12: eine nicht unter die Ansprüche fallende Ausführungsform eines Teils einer Vorrichtung mit kombinierter Materialauftrag- und Reduziereinrichtung,
- Fig. 13: mehrere beispielhafte, schematisch dargestellte Querschnittsansichten von Oberflächenformen von Beschichtungsmaterial nach dem Reduzierschritt gemäß einer beispielhaften Ausführungsform eines erfindungsgemäßen Verfahrens zur Herstellung eines Formkörpers aus mehreren Faserschichten,
- Fig. 14: eine schematische Querschnittsansicht eines Teils eines erfindungsgemäßen Verfahrens zum Reduzieren einer ersten Schichtdicke, und
- Fig. 15-17: beispielhafte Querschnittsformen von Reduziereinrichtungen bzw. kombiniert mit Glättungseinrichtungen zur Verwendung in einer erfindungsgemäßen Ausführungsform der vorliegenden Erfindung.

### BESCHREIBUNG VON BEISPIELHAFTEN AUSFÜHRUNGSFORMEN DER VORLIEGENDEN ERFINDUNG

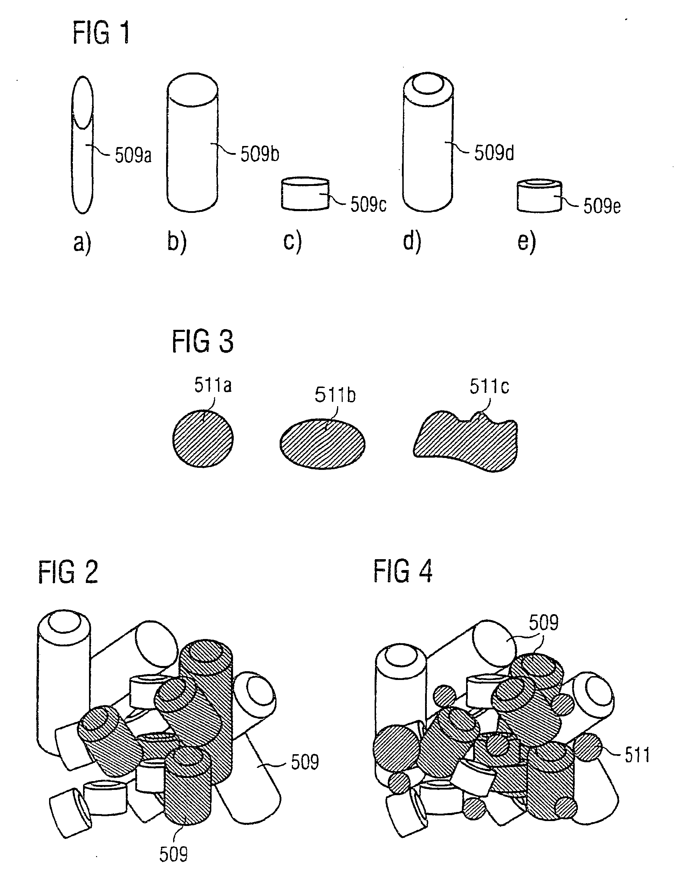

Gemäß Fig. 1 können für das Pulver Faserstücke 9 mit unterschiedlichen Querschnittforrnen und unterschiedlicher Länge sowie unterschiedlicher Gestaltung der Stirnflächen verwendet werden.

In der vorliegenden Anmeldung wird der Begriff "Faser" oder "Faserstück" für ein Gebilde oder Teilchen verwendet, dessen Länge größer ist als dessen Durchmesser, wobei z.B. die Mantelfläche mindestens in Längsrichtung der Faser bereichsweise mit konstantem Profil ausgebildet ist. Die Fasern werden z.B. durch Extrusion des Fasermaterials durch einen Extrusionskopf mit Öffnungen hergestellt, deren Form den Querschnitt der Fasern definiert.

Fig. 1a zeigt ein Faserstück 509a mit elliptischem Querschnitt, Fig. 1b zeigt ein Faserstück 509b mit kreisförmigem Querschnitt, das Faserstück 2c gemäß Fig. 1c hat eine im Vergleich zu seinem Durchmesser kürzere axiale Länge, bei den Faserstücken 502d, 5022e gemäß Fig. 1d und 1e ist die jeweils sichtbare Stirnfläche gebrochen bzw. abgeschrägt.

Die in Fig. 1 beispielhaft dargestellten Faserstücke 509a-509e werden dadurch hergestellt, dass die einen Extruder verlassenden Fasern in an sich bekannter Weise unmittelbar nach Verlassen des Extruders und nach Abkühlung mechanisch zu den Faserstücken 509a-509e mit vorbestimmter Länge und in vorbestimmter Weise gestalteter Stirnfläche abgelängt werden.

Fig. 2 zeigt ein aus unterschiedlichen Faserstücken 509 zusammengesetztes Pulver, wobei unterschiedliche Faserstücke 509 zusätzlich aus unterschiedlichem Material bestehen können.

Die in Fig. 1 beispielhaft dargestellten Faserstücke 509a-509e können hinsichtlich ihrer Geometrie in genau vorbestimmter Weise gefertigt werden, so dass auch das Pulver gemäß Fig. 2 eine genau vorbestimmte Zusammensetzung haben kann.

Der Durchmesser der für das erfindungsgemäße Pulver verwendeten Faserstücke 509 liegt vorzugsweise zwischen 0,01 und 0,5 mm, besonders bevorzugt zwischen 0,01 und 0,1 mm. Das Verhältnis von Durchmesser zu Länge der Faserstücke 509 liegt vorzugsweise zwischen 0,1 und 1000, besonders bevorzugt zwischen 0,5 und 3. Beispielhafte Querschnitte von Fasern sind in der Fig. 3 gezeigt, z.B. kreisförmig 511 a, elliptisch 511 b oder unregelmäßig geformt 511c.

Bevorzugte, extrudierbare Materialien für die Faserstücke 509 sind beispielsweise Thermoplaste wie Polypropylen oder Polyethylenterephthalat.

Die Materialien sind im Hinblick auf die erforderliche Festigkeit und das beabsichtigte Verfestigungsverfahren für die Verfestigung des Pulvers, das die Faserstücke 509 enthält, gewählt.

Aus unterschiedlichsten Gründen, wie Beeinflussung der Festigkeit, des Schrumpfverhaltens usw. kann das Pulver zusätzlich zu den Faserstücken 509, die das Gerüst der noch zu beschreibenden verfestigten Bereiche einer Pulverschicht 519 bilden, Hilfs- und Füllstoffe enthalten, die selbst faserförmig sein können, aber bevorzugt aus sphärischen, plättchenförmigen oder spratzigen Teilchen bestehen. Je nach Anwendung bestehen diese Füll- und Hilfsstoffe aus Ruß, Carbon, Glas, Metalloxiden, Keramiken oder polymeren Werkstoffen. Ihr Anteil beträgt vorzugsweise weniger als 50 Volumenprozente des Pulvers.

Fig. 4 zeigt ein Pulver, das aus unterschiedlichen Faserstücken 509 ähnlich dem Pulver der Fig. 2 besteht und zusätzlich Hilfsstoffe in Form kugelförmiger Teilchen 511a enthält.

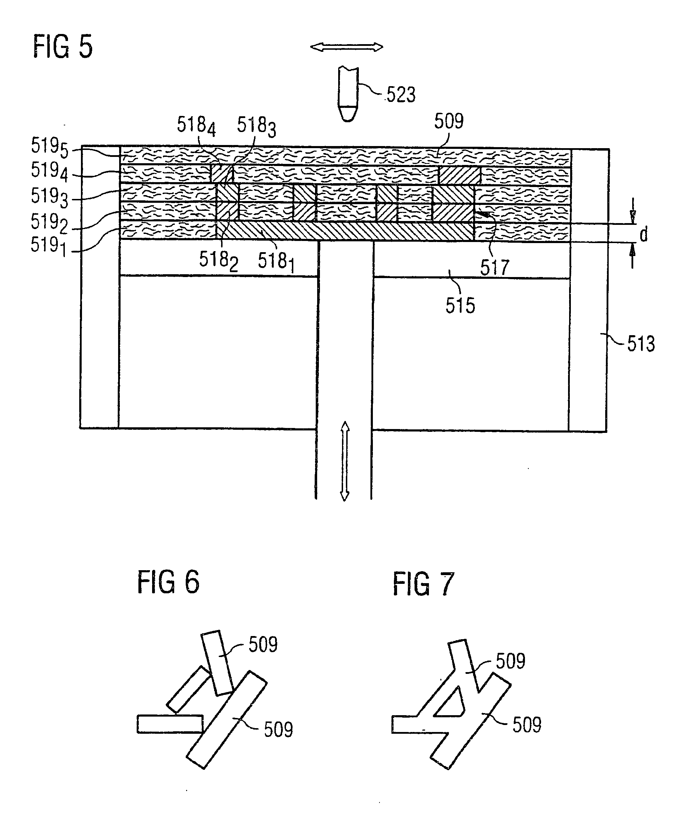

Fig. 5 zeigt schematisch einen Schnitt durch eine Vorrichtung zur Herstellung eines Formkörpers 517 durch schichtweisen Aufbau, in der das Pulver verwendet werden kann.

Gemäß Fig. 5 ist innerhalb eines zumindest nach oben offenen Zylinders 513 eine Plattform 515 mittels eines nicht dargestellten Antriebs auf- und abwärts bewegbar. Die Außenkontur der Plattform 515 ist auf die Innenkontur des Zylinders 513 abgestimmt, so dass die Plattform 515 längs ihres Außenrandes an der Innenseite des Zylinders 513 geführt ist.

Ein insgesamt mit 517 bezeichneter Formkörper, dessen bereits ausgebildete Bereiche 518 schraffiert sind, wird schichtweise durch Übereinanderanordnung von Schichten 519₁ bis 519ₙ hergestellt, die bevorzugt jeweils die gleiche, vorbestimmte Dicke d haben.

Fig. 5 stellt den Formkörper 517 in dem Zustand dar, in dem vier Schichten 519, bis 519₄ bereits ausgebildet sind und eine fünfte Schicht 519₅ ausgebildet wird. Die Schicht 519₅ wird, wie die vorhergehenden Schichten, dadurch ausgebildet, dass die Plattform 505 nach Ausbilden einer Schicht um die Strecke d in dem Zylinder 503 abgesenkt wird und Pulver 511 in den frei werdenden Raum mittels einer nicht dargestellten Vorrichtung in an sich bekannter Weise eingebracht wird. Die konstante Dicke d der neuen Pulverschicht 509₅ kann dadurch erreicht werden, dass das Pulver leicht überfüllt wird und das Niveau des Pulvers anschließend mittels eines Schiebers, einer Presse usw. auf das Niveau des Oberrandes des Zylinders 503 egalisiert wird.

Anschließen wird eine Bestrahlungseinrichtung 523, beispielsweise ein einen gebündelten Laserstrahl abstrahlender Laserkopf, entsprechend CAD Daten des herzustellenden Formkörpers 507, die den Formkörper im Bereich der Schicht 519₅ beschreiben, gesteuert, wodurch das Pulver 511 beispielsweise durch Anschmelzen in den Bereichen verfestigt wird, die den Formkörper bilden, und in den anderen Bereichen unverfestigt bleibt. Die verfestigten Bereiche 518₁ bis 518₄ der Schichten 519₁ bis 519₄ sind schraffiert dargestellt.

Auf die vorbeschriebene Weise wird der gesamte Formkörper 517 schichtweise aufgebaut und kann nach Fertigstellung aus dem Werkzeug entnommen werden und steht nach anschließender Entfernung des losen Pulvers zur weiteren Verwendung zur Verfügung.

Je nach Abmessungen der Faserstücke ordnen sich diese beim Aufbringen des Pulvers mehr oder weniger parallel zur Erstreckung der jeweiligen Schicht und parallel zueinander an, wobei die parallele Ausrichtung mit zunehmendem Verhältnis zwischen Länge des Faserstücks zu Durchmesser des Faserstücks zunimmt. Die Schichtdicke d beträgt bevorzugt das Drei- bis Fünffache des Durchmessers der Faserstücke mit größtem Durchmesser.

Fig. 6 zeigt ungeordnet angeordnete Faserstücke 509 des Pulvers 511 vor der Verfestigung.

Fig. 7 zeigt die Faserstücke der Fig. 6 nach Verfestigung, die dadurch geschieht, dass die Faserstücke 509 unter dem Laserstrahl oberflächlich angeschmolzen werden und miteinander verschmelzen. Wie ersichtlich, entsteht ein stabiles Fasergerüst, in dessen Hohlräume etwaige Füllstoffe eingelagert oder eingeschmolzen sind. Auch die Ausbildung von homogenen Schmelzefilmen ist durch diese Art der Materialeinbringung möglich.

Bei entsprechendem Längen- zu Durchmesserverhältnis der Faserstücke 509, bei dem die Fasern des nicht verfestigten Pulvers weitgehend parallel zueinander ausgerichtet und parallel zur Streckungsrichtung der Schichten gegebenenfalls in mehreren Lagen übereinander angeordnet liegen, entsteht ein Formkörper mit hohem Materialfüllungsgrad und guter Stabilität.

Bei geeignetem Material der Faserstücke kann die lokale Verfestigung auch dadurch erfolgen, dass der jeweilige zu verfestigende Schichtbereich gezielt mit einer Flüssigkeit besprüht wird, die zu einer die Faserstücke 509 unmittelbar miteinander verbindenden Reaktion führt und/ oder den Schichtbereich aushärtet und die Faserstücke dadurch miteinander verbindet.

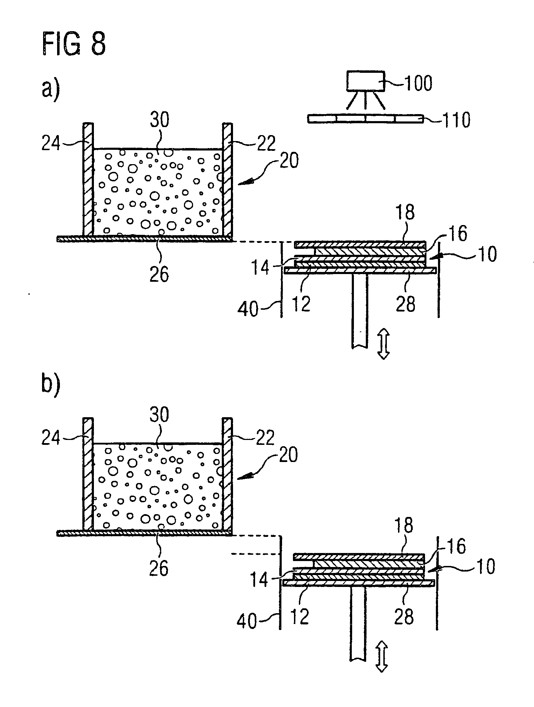

Eine beispielhafte Ausführungsform eines erfindungsgemäßen Verfahrens zum Herstellen eines dreidimensionalen Körpers 10 ist in verschiedenen Verfahrensphasen in den Fig.8a)-8g) gezeigt. Wie in der Fig. 8a) gezeigt, besteht der Körper 10 bereits aus mehreren übereinanderliegenden, verfestigten bzw. erhärteten Schichten 12, 14, 16, 18. Wie bei dem eingangs genannten bekannten Lasersinter-Verfahren oder gemäß der erwähnten SintermaskTechnologie wurde ein pulverförmiges Beschichtungsmaterial 30 in vorbestimmten Bereichen erhärtet, verfestigt, angeschmolzen oder verschmolzen. Damit hat jede Schicht 12, 14, 16, 18 die gewünschte Kontur des herzustellenden Körpers 10.

Ein Behälter 20 ist in der Fig. 8a) im Vertikalschnitt schematisch gezeigt. Der Behälter 20 ist hier als Vorratsbehälter ausgebildet, in dem das lose Pulver 30 bevorratet ist. Der Behälter 20 weist Wände 22, 24 auf, die zusammen mit einem Boden 26 den Behälter 20 bilden. Die Behälterwände 22, 24 bilden zusammen mit hier nicht dargestellten weiteren Behälterwänden und dem Boden 26 einen beispielsweise oben offenen Vorratsraum, in dem das zu verarbeitende Pulver 30 gelagert ist. Alternativ kann der Behälter 20 auch geschlossen sein.

Der herzustellende Körper 10 ruht auf einer vertikal beweglichen Trägerplatte 28, die über hier nicht dargestellte Mittel auf und abwärts bewegbar ist. Oberhalb des hier teilweise erstellten Körpers 10 befindet sich eine Strahlungsquelle 100, die beispielsweise ein Array aus einer Vielzahl von Infrarotstrahlern umfassen kann. Alternativ hierzu ist es auch möglich, als Strahlungsquelle einen zu richtenden Laserstrahl vorzusehen.

Bei der hier gezeigten beispielhaften Anordnung befindet sich unterhalb der Strahlungsquelle 100 eine Maske 110, die beispielsweise durch Bedrucken einer Glasplatte geschaffen wird. Auf dieser Maske 110 sind die zu verfestigenden Bereiche einer neu zu erstellenden Schicht 50 freigelassen, die anderen Bereiche der Glasplatte sind für die elektromagnetische Strahlung der Strahlungsquelle 100 im Wesentlichen undurchdringbar ausgebildet, beispielweise geschwärzt. Diese Ausgestaltung zeigt somit eine Ausgestaltung, in der die bereits eingangs erläuterte Sintermask-Technologie oder SMS-Technologie zum Einsatz kommt.

Im Übrigen bildet hier die Trägerplatte 28 zusammen seitlichen Wänden einen Auffangbehälter 40, in dem nicht erhärtetes Beschichtungsfasermaterial oberhalb der Trägerplatte 28 verbleibt. Die Wände können gegenüber der Trägerplatte 28 ortsfest angeordnet sein.

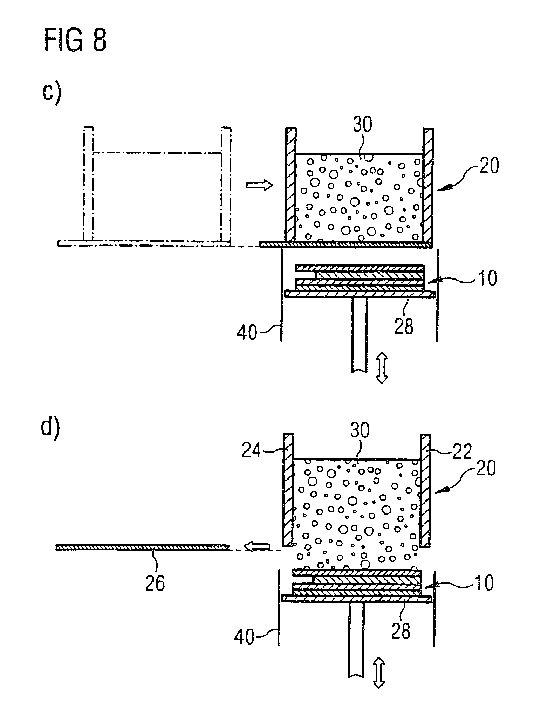

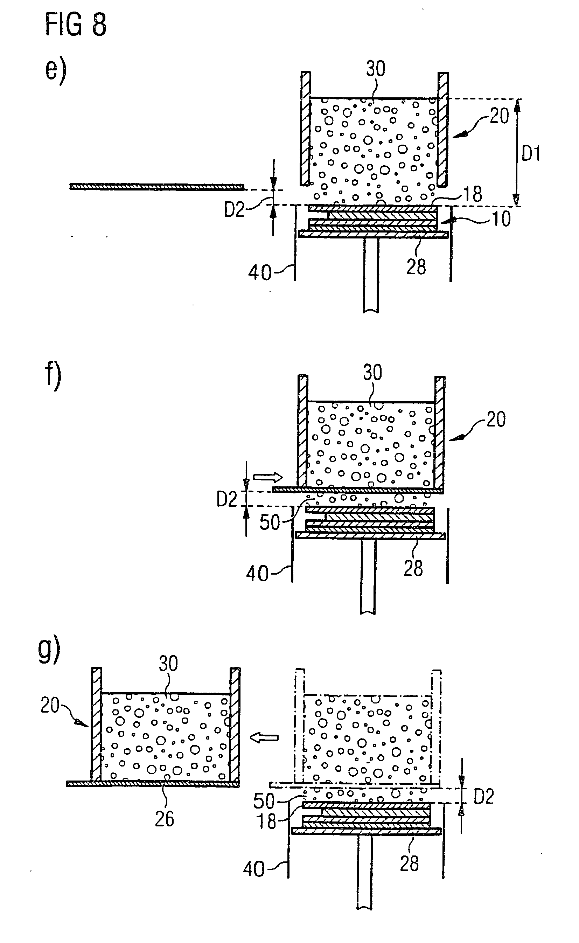

Aus den nachfolgenden Sequenzen gemäß den Fig. 8b)-8g) ist ersichtlich, dass der Behälter 20 beweglich gelagert ist, insbesondere ist er in den dargestellten Ansichten gemäß der Fig. 8 horizontal bewegbar, d.h. seitlich vom Körper 10 bis über den Körper 10 anordbar. Zudem ist der Behälterboden 26 gegenüber den Wänden 22, 24 verschieblich gelagert.

Entsprechend der Ansicht gemäß der Fig. 8a) ist die Schicht 18 des herzustellenden Körpers 10 mittels der bekannten Techniken erhärtet bzw. verfestigt worden. Zur Herstellung einer neuen Faserschicht 50 wird nun die Trägerplatte 28 mit den bereits erstellten und erhärteten Faserschichten 14, 16, 18 um eine bestimmte Weglänge nach unten verfahren. Dieser Schritt ist in der Fig. 8b) dargestellt.

Wie in der Fig. 8c) gezeigt, wird nun der Behälter 20 über die zuletzt hergestellte Faserschicht 18 verfahren. Daraufhin wird gemäß der Darstellung der Fig. 8d) der Behälterboden 26 in der gezeigten Ansicht nach links herausgezogen. Dabei rutscht das Faserpulver 30 im Behälter 20 nach unten und bedeckt die zuletzt hergestellte Faserschicht 18. Diese Verfahrensphase ist auch noch in der Fig. 8e) genauer gezeigt. Durch das Wegziehen oder Herausschieben des Behälterbodens 26 ist somit eine Faserschicht 50 aus losem Fasern mit großer Dicke D1 erzielt, die höher oder dicker ist als die tatsächlich zu erstellende Faserschichtstärke bzw. -dicke D2.

Es wird nun im Schritt gemäß Fig. 8f) das Bodenblech 26 eingefahren, wodurch die Schichtdicke D2 erzielt wird. D2 ist die entgültige Faserschichtdicke, falls nach dem Einfahren des Trennelements 26 kein Verpressen bzw. Verdichten mehr stattfindet. Mit anderen Worten: Durch den in der Fig. 8 dargestellten beispielhaften Verfahrensablauf wird zuerst eine Faserschicht auf der zuletzt erstellten Faserschicht 18 aus zu verfestigendem Material 30 gebildet, die eine höhere Schichtstärke bzw. Schichtdicke hat als die, die später dann als endgültige Schichtdicke D2 gewünscht wird. Durch das Wiedereinfahren des Bodens 26 unter den Behälter 20 wird die Schichtdicke D2 der neu herzustellenden Faserschicht 50 erzielt. Dies ist insbesondere in der Fig. 8f) gut zu erkennen.

Sodann wird im Schritt gemäß Fig. 8g) der Behälter 20 mit dem wieder eingefahrenen Trennelement 26 zurück in die linke Ausgangsstellung gefahren. Nachdem nun durch das Herausfahren des Behälters 20 zusammen mit dem Bodenblech 26, das hier als Trennelement funktioniert, ist die neue Faserschicht 50 mit gewünschter Schichtdicke D2 auf der zuletzt verfestigten Faserschicht 18 ausgebildet. Es kann nun mittels der eingangs erwähnten Strahlungsquelle 100 die gewünschte selektive Verfestigung bzw. Erhärtung des losen Faserbeschichtungsmaterials 30 der Faserschicht 50 durchgeführt werden. Danach können mit einer neuen Sequenz der Verfahrensschritte gemäß Fig. 8a)-8g) weitere Faserschichten des zu bildenden Körpers 10 erzeugt werden.

Eine mögliche alternative Ausführungsform kann auch noch einen weiteren Schritt vorsehen, bei dem zwischen dem Schritt gemäß Fig. 8f) und dem Schritt gemäß Fig. 8g) die Trägerplatte 28 etwas nach oben verfahren wird, wodurch die erstellte Faserschicht 50 verdichtet wird, da ja der Boden 26 sich noch oberhalb der Faserschicht 50 befindet. Alternativ kann der Behälter 20 um eine definierte Wegstrecke nach unten verfahren werden, um so die Faserschicht 50 auf die vorgegebene endgültige Schichtdicke D2 zu verdichten.

Erst nach dem eventuellen Verdichtungsschritt erfolgt dann das Wiederzurückfahren des Behälters 20, wie es in der Fig. 8g) dargestellt ist. Dieser mögliche Sonderfall eines erfindungsgemäßen Ausführungsbeispiels für ein Verfahren zum Herstellen eines dreidimensionalen Körpers 10 kann bei bestimmten Fasermaterialien vorteilhaft sein, insbesondere um eine höhere Dichte in der zu erstellenden Schicht 50 zu erzielen.

Den zuvor erläuterten Verfahren zur Herstellung eines dreidimensionalen Körpers 10 aus mehreren Faserschichten 12, 14, 16, 18 ist gemein, dass erstmals beim Erstellen der endgültigen Schichtdicke D2 der herzustellenden Faserschicht 50 die hierbei wirkenden Kräfte auf die zu erstellende Faserschicht 50 wie auch auf die darunter liegende Schicht 18 sowie eventuell auf die weiteren Faserschichten 12, 14, 16 geringer sind als bisher und damit die unter Umständen auftretenden Probleme unter Umständen vermieden werden können.

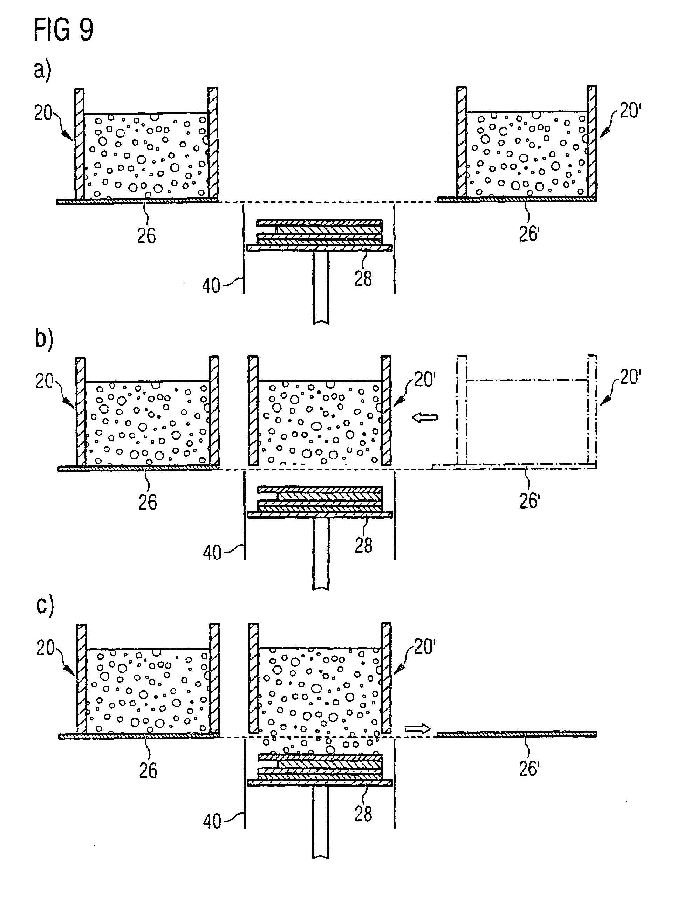

Die Fig. 9a)-9c) zeigt eine alternative Ausgestaltung einer erfindungsgemäßen Verfahrensweise und Vorrichtung zur Herstellung eines dreidimensionalen Körpers 10. Hier ist rechts und links des herzustellenden Körpers 10 jeweils ein Behälter 20, 20' vorhanden. Grundsätzlich kann ein solcher Behälter 20, 20' wie der Behälter 20 gemäß der Fig. 8 ausgebildet sein. In einem ersten Schritt wird einer der Behälter 20, hier gemäß Fig. 9a) der auf der rechten Seite befindliche Behälter 20', über den herzustellenden Körper 10 verfahren. Dann wird das Bodenblech 20' dieses Behälters gemäß der Fig. 8d) herausgefahren. Damit entspricht dieser Verfahrenszustand gemäß Fig. 9c) der in der Fig. 8d) gezeigten Phase des Verfahrens. Die weiteren Verfahrensschritte können nun gemäß Fig. 8e)-8g) durchgeführt werden. Entsprechend kann auf die obigen Ausführungsformen und Erläuterungen verwiesen werden.

Danach kann entweder der auf der rechten Seite befindliche Behälter 20' wieder über den zu erstellenden Körper 10 verfahren werden, oder der andere, auf der linken Seite befindlichen Behälter 20 über den Schichtkörper 10 zu verfahren, um in der zuvor erläuterten Weise eine weitere Schicht 50 zu erzeugen. Vorteilhaft bei der in der Fig. 9 gezeigten Ausführungsform ist, dass die Behälter 20, 20' unterschiedliche Materialien bevorraten können, so dass ein Körper 10 mit aus unterschiedlichen Fasermaterialien bestehenden Faserschichten gemäß dem hier gezeigten Verfahren gefertigt werden kann.

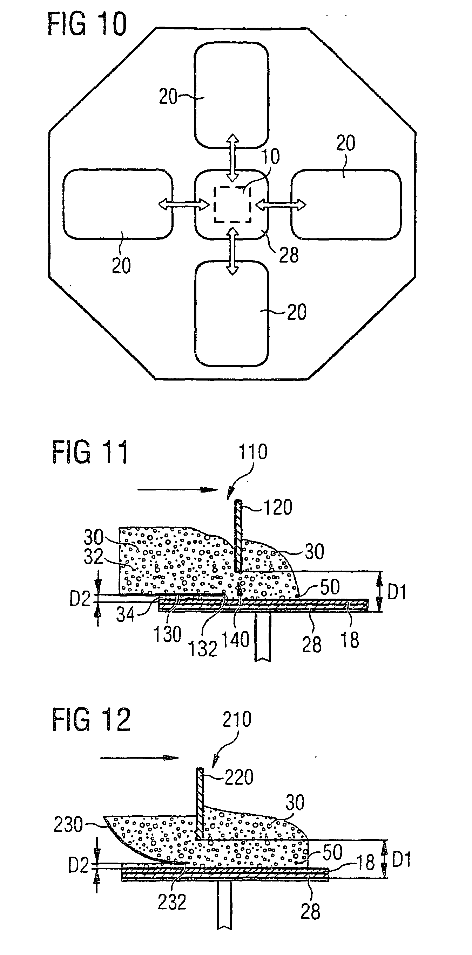

Es ist grundsätzlich auch möglich, mehr als zwei Behälter 20, 20' mit unterschiedlichen Fasermaterialien 30 vorzusehen. So ist beispielweise in der Fig. 10 eine Ausführungsform gezeigt, bei der vier Behälter 20 vorhanden sind, die jeweils unterschiedliche Fasermaterialien beinhalten. Hier kann jeder Behälter gegenüber dem zu erstellenden Schichtkörper 10 verfahren werden. Die Anlage gemäß der Fig. 10 ist recht kompakt. Damit ist es gemäß der Darstellung der Ausführungsform der Fig. 10 möglich, einen Körper 10 aus vier verschiedenen Materialien zu erstellen. Insbesondere können dadurch an Umgebungsbedingungen angepasste Körper 10 mit besonderen Eigenschaften in bestimmten Bereichen verschiedener Faserschichten 12, 14, 16, 18, 50 geschaffen werden.

Grundsätzlich kann durch die erfindungsgemäße Verfahrensweise jeweils trotz z.B. unterschiedlicher Fasermaterialien 30 die Verfahrensdauer zur Erstellung des dreidimensionalen Körpers 10 weiterhin kurz gehalten werden, da nur unterschiedliche Behälter 26 mit den verschiedenen Materialien 30 über den zu erstellenden Körper 10 zu verfahren sind.

Die Fig. 11 zeigt eine beispielhafte Ausgestaltung einer kombinierten Materialaufbring- und Reduziereinrichtung. Wie bei der zuvor erläuterten Ausführungsform ist hier ein Träger 28 in der Höhe verstellbar vorhanden, auf dem der zu erstellende Körper 10 auszubilden ist. In der hier gezeigten Ausführungsform ist bereits eine Faserschicht 18 des zu erstellenden Körpers 10 auf der Trägerplatte 28 erstellt. Es wird nun von links her die kombinierte Materialaufbring- und Reduziereinrichtung 110 über den zu erstellenden Körper 10 verfahren. Dabei befindet sich Faserpulver 30 in großer Dicke D1 vor einer senkrecht stehenden Platte 120, die zwischen der zuletzt erstellten Schicht 18 und einer unteren Kante einen Spalt 140 freilässt. Dieser Spalt 140 hat eine Breite, die größer ist als die am Ende des Aufbringvorgangs zu erstellende Schichtdicke D2. Eine horizontale Trennplatte 130 ist hinter der senkrechten Trennplatte 120 angeordnet. Durch sie wird die gewünschte endgültige Schichtdicke D2 festgelegt.

Diese Trennplatte 130 hat eine schmale Vorderkante 132, um das Beschichtungsmaterial 30, das in großer Dicke D1 auf der bereits erstellten Faserschicht 18 aufgebracht ist, in einen oberen Teil 31 und einen unteren Teil 34 aufzuteilen. Dabei wirken wohl im Wesentlichen nur vertikale Kräfte, aber keine Scher- oder Schubkräfte, die möglicherweise nicht nur für die zu erstellende Faserschicht 50 nachteilig sein können, sondern auch für die bereits erstellte Faserschicht 18. Das Beschichtungsmaterial 32, das sich oberhalb der Trennplatte 130 befindet, kann auf Grund der Ausgestaltung der Trennplatte 130 keine Kräfte auf die bereits erstellten Faserschichten 18 oder die zu erstellende Faserschicht 50 ausüben. Gleichzeitig kann auf Grund möglicherweise besonderer Gleiteigenschaften auf der Unterseite des Trennelements 130 eine einwandfreie Oberfläche und Schichtdicke D2 erzeugt werden.

In dem hier gezeigten Ausführungsbeispiel gemäß der Fig. 11 wird also diese kombinierte Materialaufbring- und Reduziereinrichtung 110 soweit nach rechts verschoben, dass insgesamt auf dem Träger 28 eine definierte Schicht aus unverfestigtem Fasern erzeugt wird. Dann kann die notwendige Verfestigung an den vorbestimmten Stellen der Faserschicht 50 erfolgen. Dann kann ein weiterer Behälter entsprechend über den Träger 28 geführt werden, oder z.B. wird die Einheit 110 gedreht und dann zur Erzeugung einer neuen Faserschicht 50 nunmehr von der in der Fig. 11 gezeigten rechten Seite auf die linke Seite verfahren. Grundsätzlich ist es auch möglich, dass eine solche Einheit 110 auf einer Kreisbahn bewegt wird. Dabei würde dann nach Aufbringen der Faserschicht 50 die Faserschicht 50 freiliegen, so dass sie in gewünschter, bekannter Weise verfestigt wird. Die Einheit 110 würde nach Vollendung einer Umdrehung zur Erzielung einer neuen Faserschicht 50 zurückkehren. Hierzu ist im Übrigen anzumerken, dass natürlich nach dem Verfestigen der Faserschicht 50 der Träger 28 um die gewünschte neue Schichtstärke D2 nach unten verfahren wird, so dass eine neue Faserschicht 50 mittels der Einheit 110 erzeugt werden kann.

Die Fig. 12 zeigt eine der Fig. 11 sehr ähnliche Ausgestaltung einer Einheit 210, die grundsätzlich der Einheit 110 entspricht. Anstatt der flachen Trennplatte 130 ist hier die Trennplatte 230 nach oben gebogen. Dadurch wird erreicht, dass unmittelbar nach dem Aufbringen des Materials 30 an der Vorderkante 232 das Material 30, hier Fasern, der zu erzeugenden Faserschicht 50 nicht mehr an der Unterseite der Trenneinrichtung 230 entlang gleitet. Dadurch können eventuelle Anhaftungen etc. vermieden werden, gleichzeitig aber wird u.U. weiterhin verhindert, dass das oberhalb der gebogenen Trennplatte 230 befindliche Beschichtungsmaterial 30 Kräfte auf die zu erstellende Faserschicht 50 oder darunterliegende Faserschichten 18 etc. ausübt. Die Ausgestaltung der Einheit 210 gemäß der Fig. 12 ist ansonsten gleich der Ausgestaltung der Einheit 110 auszuführen. Sie weist ebenfalls eine senkrechte Trennwand 220 auf.

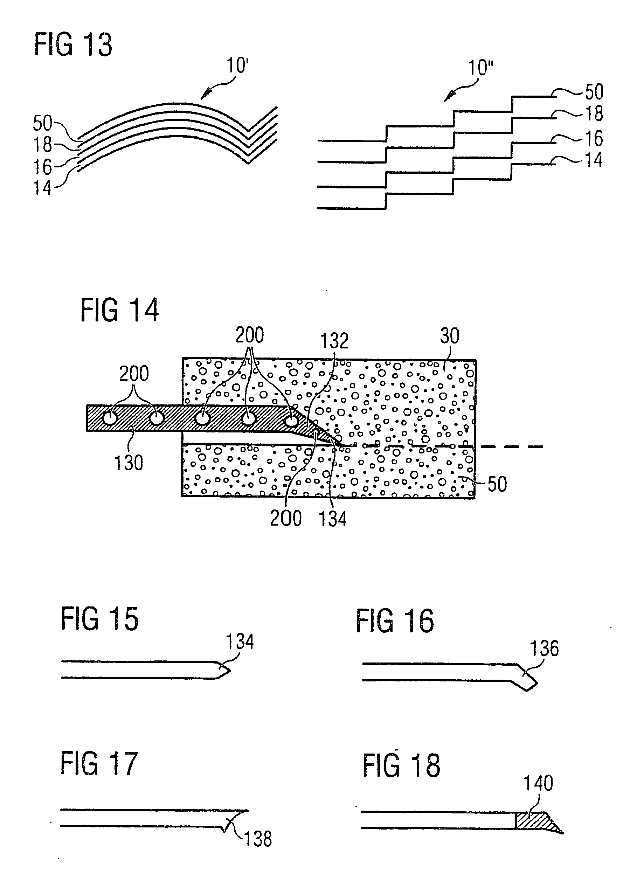

Die Fig. 13 zeigt beispielhafte Oberflächenausgestaltungen von Schichten. Auf Grund der gezeigten erfindungsgemäßen Verfahrensweise ist es nämlich ohne weiteres auch möglich, nicht nur plane neue Faserschichten 50 mit definierter Schichtdicke D2 zu erzeugen, sondern es können auch gewellte oder gezackte neue Faserschichten 50 erzeugt werden, die dann zu Körpern 10', 10" führen, die keine einzelnen ebenen Faserschichten 12, 14, 16, 18, 50 aufweisen, sondern gestufte oder gewellte Oberflächenformen haben.

Die Fig. 14 zeigt ein Detail möglicher Trenneinrichtungen, hier der Platte 130, wie sie beispielsweise bei der Ausführungsform gemäß den Fig. 11 und 12 zum Einsatz kommen können. Das Trennelement 130 weist hier die Vorderkante 132 auf, die speziell in eine äußerst dünne Schneide 134 ausläuft, so dass eine problemlose Trennung des Materials 30 erfolgen kann und dabei die neu zu erstellende Schicht 50 mit definierter Schichtstärke D2 geschaffen wird. Dabei hat bei dieser beispielhaften Ausführungsform der Platte 130 die Schneide 134 einen Hinterschnitt, so dass unmittelbar hinter der Schneide 134 das Material der neuen Schicht 50 nicht mehr an der Platte 130 oder der Vorderkante 132 entlang gleitet, wodurch unter Umständen auftretende Ablösungsprobleme vermieden werden.

Anzumerken ist, dass in einer beispielhaften Ausführungsform in dem Trennelement 130 und/oder der Schneide 134 Kühlelemente wie z.B. Kühlleitungen 200 vorhanden sind, um eine geeignete Kühlung einer zu verfestigenden Schicht 50 erzielen zu können. Hier sind beispielsweise Kühlleitungen 200 schlangenlinienförmig im Trennelement 130 ausgebildet, durch die ein Kühlmedium wie z.B. Wasser oder andere Fluide strömen. Die Kühlleitungen 200 sind in einen (nicht gezeigten) Kühlkreislauf mit entsprechenden Elementen eingegliedert.

Alternativ kann eine entsprechende Ausgestaltung auch zur gleichmäßigen Erwärmung des Trennelements 130 und/oder der Schneide 134 vorgesehen sein. Es ist auch eine Kombination von Kühl- und Wärmeelementen 200 in dem Trennelement 130 denkbar. Beispielsweise könnte hierzu entweder ein kühlendes oder erwärmendes Fluid durch die Leitungen 200 gepumpt werden.

Die Fig. 15 bis 18 zeigen weitere beispielhafte Ausgestaltungen von Vorderkanten von Trennelementen, die beispielsweise in den Einheiten 110, 210 gemäß den Fig. 11 und 12 aber auch in den Einrichtungen gemäß den Fig. 9 und 10 eingesetzt werden können. So zeigt die Fig. 14 eine Ausgestaltung mit oben und unten spitz zulaufender Kante oder Schneide 134. Die Fig. 15 hat wiederum eine der Fig. 14 gleichende Ausgestaltung, wobei die Vorderkante etwas anders ausgestaltet ist, nämlich mit einer schräg nach vorne zulaufenden Spitze und Hinterschneidung. Die Fig. 17 wiederum zeigt eine Ausgestaltung mit Hinterschneidung, wobei eine Abtrennfläche und leichte Gleitkante 138 an der Vorderkante geschaffen ist. Schließlich zeigt die Fig. 18 eine der Fig. 14 sehr ähnliche Ausgestaltung der Vorderkante 140 für ein Trennelement 130.

## Patentansprüche

1. Verfahren zum Herstellen eines dreidimensionalen Körpers (10) aus einzelnen, verfestigten Schichten (12, 14, 16, 18), die aus einem pulverförmigen Beschichtungsmaterial (30) erzeugt werden, mit den folgenden Verfahrensschritten:
- Aufbringen eines zu verfestigenden Beschichtungsmaterials (30) in einer ersten Schichtdicke (D1) auf einer Unterlage oder einer bereits verfestigten Schicht (18) des herzustellenden Körpers (10) durch Herausziehen eines verschiebbar gelagerten Bodenelementes (26) eines Vorratsbehälters (20) mit darin befindlichem Beschichtungsmaterial (30),
- Trennen desjenigen Teils des aufgebrachten, noch nicht verfestigten Beschichtungsmaterials (30), der sich oberhalb einer zweiten Schichtdicke (D2), die geringer ist als die erste Schichtdicke (D1), befindet, von dem unterhalb der zweiten Schichtdicke (D2) befindlichen Beschichtungsmaterial (30), durch Einschieben des Bodenelementes (26) in das Beschichtungsmaterial (30), sodass eine neue Schicht (50) aus unverfestigtem Beschichtungsmaterial (30) verbleibt, die die zweite Schichtdicke (D2) hat, und
- Verfestigen des verbleibenden Beschichtungsmaterials (30) der neuen Schicht (50) an vorbestimmten Stellen zur Erzeugung einer gewünschten Schichtkontur des dreidimensionalen Körpers (10).

2. Verfahren nach Anspruch 1, **dadurch gekennzeichnet, dass** nach dem Schritt des Trennens des Beschichtungsmaterials (30) durch Einschieben des Bodenelementes (26) in das Beschichtungsmaterial (30) bei einem Herausfahren des Vorratsbehälters (20) zusammen mit dem Bodenelement (30) derjenige Teil des aufgebrachten, noch nicht verfestigten Beschichtungsmaterials (30), der sich oberhalb der zweiten Schichtdicke (D2) befindet, in dem Vorratsbehälter (20) für Beschichtungsmaterial (30) verbleibt.

3. Verfahren nach einem der voranstehenden Ansprüche, **dadurch gekennzeichnet, dass** verschiedene Schichten (12, 14, 16, 18, 50) des Körpers (10) aus sich unterscheidenden Beschichtungsmaterialen (30) erstellt werden.

4. Verfahren nach einem der voranstehenden Ansprüche, **dadurch gekennzeichnet, dass** vor dem Verfestigen des verbleibenden Beschichtungsmaterials (30) das Beschichtungsmaterial (30) verdichtet wird durch Andrücken eines Formkörpers (26; 130) oder durch Hochfahren des bereits hergestellten Teils des Körpers (10) mit der darauf befindlichen definierten Schicht (50) aus unverfestigtem Beschichtungsmaterial (30) gegen einen Formkörper (26; 130).

5. Vorrichtung zum Herstellen eines dreidimensionalen Körpers (10) aus einzelnen verfestigten Schichten (12, 14, 16, 18, 50) aus einem pulverförmigen Beschichtungsmaterial (30), mit:
- einem Vorratsbehälters (20) für Beschichtungsmaterial (30) mit verschiebbar gelagertem Bodenelement (26), wobei durch Herausziehen des Bodenelementes (26) das Beschichtungsmaterial (30) in einer ersten Schichtdicke (D1) auf einer Unterlage (28) oder einer bereits verfestigten Schicht (18) des herzustellenden Körpers (10) aufbringbar ist und durch Einschieben des Bodenelementes (26) in das Beschichtungsmaterial (30) derjenige Teil des aufgebrachten, noch nicht verfestigten Beschichtungsmaterials (30), der sich oberhalb der zweiten Schichtdicke (D2), die geringer ist als die erste Schichtdicke (D1), derart von dem unterhalb der zweiten Schichtdicke (D2) befindlichen Beschichtungsmaterials (30) trennbar ist, dass eine definierte Schicht (50) aus unverfestigtem Beschichtungsmaterial (30) verbleibt, die die definierte zweite Schichtdicke (D2) hat, und
- einer Verfestigungseinrichtung (100), die dazu ausgebildet ist, das verbleibende Beschichtungsmaterial (30) an vorbestimmten Stellen zur Erzeugung einer gewünschten Schichtkontur des dreidimensionalen Körpers (10) zu verfestigen.

6. Vorrichtung nach Anspruch 5, **dadurch gekennzeichnet, dass** mehrere Vorratsbehälters (20) vorhanden sind.

7. Vorrichtung nach Anspruch 5 oder 6, **dadurch gekennzeichnet, dass** der Vorratsbehälter (20) beweglich, insbesondere verschiebbar gelagert ist.

8. Vorrichtung nach einem der Ansprüche 5-7, **dadurch gekennzeichnet, dass** Bodenelement (26) an der der erstellten Schicht (50) zugewandten Außenfläche als Formkörper (26) ausgebildet ist.

9. Vorrichtung nach einem der Ansprüche 5-8, **dadurch gekennzeichnet, dass** das Bodenelement flächig ist und eine schmale Trennkante (134; 136; 138; 140) aufweist.

10. Vorrichtung nach einem der Ansprüche 5-9, **dadurch gekennzeichnet, dass** eine Trageinrichtung (28) vorhanden ist, auf der der herzustellende Körper (10) erstellt wird.

11. Vorrichtung nach Anspruch 10, **dadurch gekennzeichnet, dass** die Trageinrichtung (28) im Wesentlichen vertikal bewegbar ist

12. Vorrichtung nach Anspruch 10 oder 11, **dadurch gekennzeichnet, dass** um die Trageinrichtung (28) herum mehrere Vorratsbehälter (20) angeordnet sind.

## Claims

1. A method for producing a three-dimensional body (10) consisting of individual solidified layers (12, 14, 16, 18) generated by pulverulent coating material (30), the method comprising the steps of:
- disposing a coating material (30) to be solidified on a carrier plate or an already-solidified layer (18) of the body (10) to be produced in a first layer thickness (D1) by withdrawing a slidably supported bottom element (26) of a storage container (20) filled with the coating material (30),
- separating said portion of the disposed not yet solidified coating material (30), which is located above a second layer thickness (D2) being lesser than the first layer thickness (D1), from said coating material (30) located below the second layer thickness (D2) by inserting the bottom element (26) into the coating material (30), such that a new layer (50) of un-solidified coating material (30) remains, which has the second layer thickness (D2), and
- solidifying the remaining coating material (30) of the new layer (50) at predetermined locations for generating a desired layer contour of the three-dimensional body (10).

2. The method according to claim 1, **characterized in that**, after the step of separating the coating material (30) by inserting the bottom element (26) into the coating material (30), said portion of the disposed not yet solidified coating material (30), which is located above the second layer thickness (D2), remains in the storage container (20) for the coating material (30) by pulling out the storage container (20) together with the bottom element (30).

3. The method according to any one of the preceding claims, **characterized in that** different layers (12, 14, 16, 18, 50) of the body (10) are produced of different coating materials (30).

4. The method according to any one of the preceding claims, **characterized in that**, prior solidifying the remaining coating material (30), said coating material (30) is compacted by pressing on a moulded body (26; 130) or by raising the already-produced portion of the body (10) with the layers (50) disposed thereon of un-solidified coating material (30) against a moulded body (26; 130).

5. An apparatus for producing a three-dimensional body (10) consisting of individual solidified layers (12, 14, 16, 18, 50) of a pulverulent coating material (30), comprising:
- a storage container (20) for the coating material (30) including a slidably supported bottom element (26), wherein the coating material (30) is disposable on a carrier device (28) or an already-solidified layer (18) of the body (10) to be produced in a first layer thickness (D1) by withdrawing the bottom element (26), and said portion of the disposed not yet solidified coating material (30), which is located above the second layer thickness (D2) being lesser than the first layer thickness (D1), is separable from the coating material (30), which is located below the second layer thickness (D2), by inserting the bottom element (26) into the coating material (30), such that a defined layer (50) of un-solidified coating material (30) remains, which has the defined second layer thickness (D2), and
- a solidification device (100) configured to solidify the remaining coating material (30) at predetermined locations for generating a desired layer contour of the three-dimensional body (10).

6. The apparatus according to claim 5, **characterized in that** a plurality of storage containers (20) are present.

7. The apparatus according to any one of claims 5 or 6, **characterized in that** the storage container (20) is movably, in particular slidably supported.

8. The apparatus according to any one of claims 5 to 7, **characterized in that** the bottom element (26) is formed as a moulded body (26) at an outer surface facing the generated layer (50).

9. The apparatus according to any one of claims 5 to 8, **characterized in that** the bottom element is planar and comprises a thin cutting edge (134; 136; 138; 140).

10. The apparatus according to any one of claims 5 to 9, **characterized in that** a carrier device (28) is present, on which the body (10) to be produced is generated.

11. The apparatus according to claim 10, **characterized in that** the carrier device (28) is substantially vertically movable.

12. The apparatus according to claim 10 or 11, **characterized in that** a plurality of storage containers (20) is located around the carrier device (28).

## Revendications

1. Procédé de réalisation d'un corps tridimensionnel (10) à partir de couches solidifiées individuelles (12, 14, 16, 18) qui sont produites à partir d'un matériau de revêtement (30) pulvérulent qui comporte les étapes de procédé suivantes :
- application d'un matériau de revêtement (30) à solidifier en une première épaisseur de couche (D1) sur un support ou sur une couche (18) déjà solidifiée du corps (10) à réaliser en extrayant un élément de fond (26) d'un réservoir (20) contenant du matériau de revêtement (30), cet élément de fond (26) étant logé de manière à pouvoir être déplacé,
- séparation de la partie du matériau de revêtement (30) appliqué, pas encore solidifié, qui se trouve au-dessus d'une seconde épaisseur de couche (D2), laquelle est plus petite par rapport à la première épaisseur de couche (D1), du matériau de revêtement (30) se trouvant en dessous de la seconde couche d'épaisseur (D2) par l'insertion de l'élément de fond (26) dans le matériau de revêtement (30) de sorte qu'une nouvelle couche (50) se composant de matériau de revêtement (30) non solidifié reste, cette nouvelle couche (50) ayant la seconde couche d'épaisseur (D2), et
- solidification du matériau de revêtement (30) restant de la nouvelle couche (50) à des emplacements prédéterminés afin de produire un contour de couche souhaité du corps tridimensionnel (10).

2. Procédé selon la revendication 1, **caractérisé en ce que**, après l'étape de séparation du matériau de revêtement (30) par l'insertion de l'élément de fond (26) dans le matériau de revêtement (30), lors de l'extraction du réservoir (20) conjointement avec l'élément de fond (26), la partie du matériau de revêtement (30) appliqué, pas encore solidifié, qui se trouve au dessus de la seconde épaisseur de couche (D2) reste dans le réservoir (20) pour le matériau de revêtement (30).

3. Procédé selon une des revendications précédentes, **caractérisé en ce que** plusieurs couches (12, 14,16, 18, 50) du corps (10) sont réalisées à partir de matériaux de revêtement (30) se différentiant.

4. Procédé selon une des revendications précédentes, **caractérisé en ce que**, avant la solidification du matériau de revêtement (30) restant, le matériau de revêtement (30) est densifié en appuyant un corps moulé (26 ; 130) ou en acheminant vers le haut la partie du corps (10) déjà réalisée, avec la couche (50) définie s'y trouvant dessus se composant d'un matériau de revêtement (30) non solidifié, contre un corps moulé 26 ; 130).

5. Dispositif destiné à réaliser un corps tridimensionnel (10) se composant de couches (12, 14, 16, 18, 50) solidifiées individuelles en un matériau de revêtement (30) pulvérulent, avec
- un réservoir (20) destiné à du matériau de revêtement (30), ce réservoir ayant un élément de fond (26) logé de manière à pouvoir être déplacé, où, lors de l'extraction de l'élément de fond (26), le matériau de revêtement (30) est applicable en une première épaisseur de couche (D1) sur un support (28) ou sur une couche (18) déjà solidifiée du corps (10) à réaliser et, lors de l'insertion de l'élément de fond (26) dans le matériau de revêtement (30), la partie du matériau de revêtement (30) appliqué pas encore solidifié, se trouvant au dessus de la seconde épaisseur de couche (D2) qui est plus petite que la première épaisseur de couche (D1), est susceptible d'être séparée du matériau de revêtement (30) se trouvant en dessous de la seconde épaisseur de couche (D2) de telle sorte qu'une couche déterminée (50) se composant du matériau de revêtement (30) non solidifié reste, cette couche ayant la seconde épaisseur de couche (D2), et
- un équipement de solidification (100) qui est formé de sorte à solidifier le matériau de revêtement (30) restant à des emplacements
- prédéterminés afin de produire un profil de couche souhaité du corps tridimensionnel (10).

6. Dispositif selon la revendication 5, **caractérisé en ce que** plusieurs réservoirs (20) sont disponibles.

7. Dispositif selon la revendication 5 ou 6, **caractérisé en ce que** le réservoir (20) est mobile, en particulier il est logé de manière à pouvoir être déplacé.

8. Dispositif selon une des revendications de 5 à 7, **caractérisé en ce que** l'élément de fond (26) sur la surface extérieure tournée vers la couche (50) réalisé est formé en tant que corps moulé (26).

9. Dispositif selon une des revendications de 5 à 8, **caractérisé en ce que** l'élément de fond est plat et comporte un bord de séparation (134 ; 136 ; 138 ; 140).

10. Dispositif selon une des revendications de 5 à 9, **caractérisé en ce que** un équipement porteur (28) est disponible sur lequel le corps (10) à réaliser est réalisé.

11. Dispositif selon la revendication 10, **caractérisé en ce que** l'équipement porteur (28) est essentiellement déplaçable verticalement.

12. Dispositif selon la revendication 10 ou 11, **caractérisé en ce que** plusieurs réservoirs (20) sont agencés tout autour du dispositif porteur (28).
